# EUROPÄISCHE PATENTSCHRIFT

(11) **EP 0 960 080 B1**
(45) Veröffentlichungstag und Bekanntmachung des Hinweises auf die Patenterteilung: **24.04.2002**
(21) Anmeldenummer: 97953674.5
(22) Anmeldetag: 23.12.1997
(51) Int. Cl.: C04B 38/00

(54) **AUSSENBELAG MIT WASSERDURCHLÄSSIGEN EIGENSCHAFTEN**
OUTER COATING WITH WATER-PERMEABLE PROPERTIES
REVETEMENT EXTERIEUR PERMEABLE A L'EAU

(30) Priorität: 27.12.1996 DE 19654393; 17.01.1997 DE 19701420
(43) Veröffentlichungstag der Anmeldung: 01.12.1999
(73) Patentinhaber: Steidle-Sailer, Andreas, Dipl.-Ing., 72488 Sigmaringen (DE)
(72) Erfinder: Steidle-Sailer, Andreas, Dipl.-Ing., 72488 Sigmaringen (DE)
(74) Vertreter: Otten, Herbert
(86) Internationale Anmeldenummer: DE9703023
(87) Internationale Veröffentlichungsnummer: WO9829356

(56) Entgegenhaltungen:
- EP-A- 0 610 612
- DE-A- 1 927 576
- DE-A- 3 837 430
- DE-A- 4 402 432
- DE-U- 8 702 942
- DE-U- 9 004 020
- GB-A- 251 964

## Beschreibung

Die Erfindung betrifft einen Belag oder Platte mit wasserdurchlässigen Eigenschaften.

### Stand der Technik:

In den letzten Jahren ist das Problem der Entwässerung von Außenbelägen aller Art in hohem Maße aktuell geworden. Zunehmend wird angestrebt, das aus Niederschlägen und Schneeschmelze anfallende Wasser nicht mehr einer zentralen Kläranlage oder Wasser-Sammeleinrichtung zuzuleiten. Befestigte Flächen sollen deshalb nicht versiegelt, sondern entsiegelt werden, damit das Wasser unmittelbar vor Ort großflächig durch den Belag selbst versickern kann. Hierfür sind wasserdurchlässige Pflasterelemente in Form von Platten, Pflastersteinen, Verbundsteinen und dergleichen bekannt geworden, die zur Pflasterung von Gehwegen, Außenanlagen oder Straßenbeläge usw. dienen (siehe DE 39 09 169 A1). Bei diesem bekannten wasserdurchlässigen Pflasterelement handelt es sich um einen Mehrschichtenaufbau, der insbesondere aus einer dünnen, wasserdurchlässigen oberen Natursteinschicht und aus einer dickeren, wasserdurchlässigen Betonschicht besteht.

Eine ähnliche Lösung wird in der EP 0 722 014 A1 angestrebt, mit einem Mehrschichtverbundstein, dessen Hinterbetonschicht aus einem porösen, wasserdurchlässigen Material besteht.

Das Problem der Entwässerung von insbesondere Verkehrsflächen ist weiterhin in der Veröffentlichung Muth: "Entwässerung von Verkehrsflächen" in s+t 48 (1994), Seite 12 ff beschrieben.

Für Zufahrtswege zu Privatgaragen, Gartenwege, Pkw-Abstellplätzen usw. werden nach wie vor meist Asphalt oder Beton verwendet. Hiermit ist zwar eine gute Haltbarkeit verbunden. Es findet jedoch eine totale Versiegelung des Bodens statt, so daß zwingend ein Gefälle und aufwendige Anordnungen von Entwässerungsschächten oder -rinnen mit entsprechenden Anschluß an die Kanalisation erforderlich sind.

Sofern man hierfür Beton-Kleinpflaster verwendet, gilt hierfür ähnliches, wenn dieses nicht als sickerfähiges Pflaster ausgebildet ist. Bei Pflastern selbst hat es sich als nachteilig gezeigt, daß die Fugen verschlammen und häufig mittels Zementmörtel ausgefüllt werden, um eine bessere Fixierung der Steine zu erzielen. Für starke Niederschläge mußten deshalb trotzdem Abflüsse geschaffen werden.

Die Versiegelung des Bodens durch entsprechend wasserundurchlässige Beläge wurde deshalb in den letzten Jahren immer mehr angeprangert, da dies zwangsläufig zu einer hohen Zusatzbelastung der Kanäle, Kläranlagen, Vorfluter und Flüsse führte, verbunden mit immer häufig auftretenden Hochwässerschäden.

Zwar hat die Pflastersteinindustrie mit sogenannten "Drainpflaster" versucht, hier eine wirksame Abhilfe zu schaffen (siehe oben genannter Stand der Technik). Auch hier ergeben sich jedoch teilweise Probleme durch Verschmutzung und Verschlammung der Beläge, was die Wasserdurchlässigkeit insgesamt stark gemindert hat.

Sobald ein Wegebelag mit relativ billigem Bindemittel (Zement, Asphalt oder Polymer) hergestellt wird, ist es zwangsläufig erforderlich, daß die Zuschlagsstoffe, wie Kies und Sand, über ein breites Kornspektrum, z. B. 0,1 mm bis 8 oder bis 12 mm nach der sogenannten Fuller-Kurve aufgebaut sind. Diese Kurve steht für höchste Dichtigkeit des Belags. Die jeweils feineren Korngrößen können sich zwischen den nächst größeren Korngrößen einlagern. Damit entsteht ein dichtes Gefüge mit großer Festigkeit, weil Zement oder Asphalt an möglichst vielen Berührungspunkten die Verklebung oder Verkittung und Verfestigung herstellen muß. Es ist selbstredend, daß dies einer guten Wasserdurchlässigkeit widerspricht, was an sich auch gewollt ist.

Aus der DE 38 37 430 C2 ist ein Verfahren zur Herstellung eines Formteils aus Kiesel- oder Splittsteinen bekannt geworden. Dabei werden Kiesel- oder Splittsteine mit einer Korngröße zwischen 0,5 bis 10 cm verwendet, wobei ein Acrylharz als Kunststoff-Bindemittel eine Verklebung der Kiesel- oder Splittsteine bewirkt. Aufgrund der großen Kornbandbreite von 1 zu 20 und den verwendeten großen Korngröße wird relativ viel Kunststoff-Bindemittel sowie Härter benötigt, was den Belag stark verteuert. Die relativ großen Steine lassen auch nur eine eingeschränkte Verwendung zu. Auch die DE-OS 19 27 576 beschreibt einen porösen, wasser- und luftdurchlässigen Belag, der aus Sand, Kies beliebiger Körnung bzw. Größe besteht. Diese Zuschlagsstoffe werden ebenfalls mit einem Kunststoff-Bindemittel umhüllt, so daß sie stellenweise fest aneinander haften. Nachteilig ist ebenfalls die undefinierte Zusammenstellung der Zuschlagsstoffe mit hoher Kornbreite was zu einem hohen Verbrauch an Kunststoff-Bindemittel führt. Die große Kornbandbreite zwischen 0,5 mm und 50 mm läßt ebenfalls eine nicht optimale Wasser-Durchlässigkeit vermuten.

Bei der bekannten DE 40 22 586 A1 handelt es sich um ein wasserdurchlässiges Flächenbefestigungselement mit einem ähnlichen Aufbau wie der Gegestand der eingangs erwähnten EP 0 722 014. Eine obere Vorsatzschicht ist sehr feinporig ausgeführt und wird von einer grobkörnigen Schicht unterstützt. Eine Verklebung der Zuschlagsstoffe ist nicht vorgesehen.

Die DE 23 56 354 zeigt ein Verfahren zur Herstellung von Auflagen auf Fahrbahndecken oder Fahrbahn-Seitenstreifen. Hier handelt es sich um einen Belag, der wasserdicht ausgeführt wird. Als Zuschlagsstoffe werden im wesentlichen Splittkörner verwendet, die mit einem Kunststoff-Drainagenmörtel verklebt werden.

Das gattungsbildende Dokument DE-A-44 02 432 betrifft die Herstellung eines granitähnlichen Polymerkunststeins aus einem zerkleinerten, gesteinsartigem Granulat wie Altglas, Natur- oder Kunststeinabfällen oder auch aus Bauschutt (Beton und Mauersteine), wobei ein oberflächenbeschichtetes Granulat herzustellen ist. Dabei wird das zerkleinerte gesteinsartige Granulat mit einer Oberflächenbeschichtung versehen, welches ein Bindemittel für eine Granulatbeschichtung umfaßt, welches mit mineralischen Feinfüllstoffen wie Glasmehl, Quarzmehl, Kreide usw. angereichert ist. Hierdurch entsteht ein Granulat mit einer fullstoffbedingten relativ rauhen und porösen Oberfläche, welches einer Art Verzahnung bei der Herstellung des Polymerkunststeins bildet.

Schließlich betrifft das Dokument GB-A-0 251 964 die Herstellung eines porösen Steins für Filterzwecke oder dergleichen, bei welchem zwar eine möglichst gleiche Granulatgröße mit einem Kunststoffkleber behandelt wird, wobei jedoch eine Formgebung unter Druck- und Temperatureinwirkung erforderlich ist.

Die Zusammenschau des obigen Standes der Technik zeigt auf, daß bekannte wasserdurchlässige Beläge mit größerem Porenvolumen bekannt sind, wobei die Zuschlagsstoffe mit einem Kunstharzkleber verklebt werden. Um bei diesem bekannten Belägen jedoch eine ausreichende Festigkeit zu erzielen, sind Kleberanteile von größer 5 % erforderlich, was sehr hohe Kosten mit sich bringt. Verwendet man weniger Bindemittel, so ist dies mit einer erheblichen Reduzierung der Festigkeit und insbesondere der Biegezugfestigkeit verbunden.

### Aufgabe und Vorteile der Erfindung:

Der Erfindung liegt die Aufgabe zugrunde, einen Belag oder Platte mit guten wasserdurchlässigen Eigenschaften vorzuschlagen, der sich von herkömmlichen sickerfähigen Belägen insbesondere durch geringere Kosten bei verbesserten Festigkeitseigenschaften unterscheidet. Dabei soll der Belag neben einer optimalen Wasserdurchlässigkeit auch vielseitig verwendbar sein und ggf. Variationsmöglichkeiten in der optischen Ausgestaltung bieten.

Diese Aufgabe wird durch die kennzeichnenden Merkmale des Sachanspruchs 1 sowie des Verfahrensanspruchs 13 gelöst. In den jeweiligen Unteransprüchen sind vorteilhafte und zweckmäßige Weiterbildungen des davorstehenden Grundgedankens angegeben.

Der Erfindung liegt die Erkenntnis zugrunde, daß man einen dauerhaft porösen und extrem wasserdurchlässigen Belag vor allem dadurch erhält, daß ein sehr gut sortierter mit engem Kornaufbau (Einkorn) von z. B. 1 bis 3, oder 2 bis 4 mm möglichst ohne Unter- und Überkorn verwendet wird. Da die Zwischenräume zwischen den Einzelkörnern nicht mit einem Unterkorn ausgefüllt werden, entstehen Hohlräume, die eine optimale Entwässerung bewirken. Es werden auch sehr gute und damit teure Bindemittel (Kleber) verwendet, um an den wenigen Berührungspunkten der nahezu gleich großen und möglichst runden Einzelkörner eine "Verklebung" so stabil zu machen, daß die notwendige Druckfestigkeit und vor allem auch die notwendige Biegezugfestigkeit bzw. Biegezugsteifigkeit erzielt wird. Hierzu kann ein spezielles Harzgemisch auf Epoxyd- oder Polyurethanbasis oder dergleichen verwendet werden.

Man ist zur überraschenden Erkenntnis gelangt, daß mit optimal vorbereiteten Ausgangsstoffen und der Verwendung von eher wenig, jedoch extrem guten Harzbindemitteln ein optimaler Erfolg erzielt wird. Verwendet man demgegenüber viel Harz zur Bindung der Einzelkörner, werden die Beläge sehr hart und spröde und neigen schnell zum Reißen schon bei geringer Belastung des Belags und insbesondere bei geringem Nachgeben des Untergrunds.

Ein so richtig vorbereiteter Belag kann auf einer gut verdichteten, wasserdurchlässigen Frostschutzschicht aus Kies oder Schotter in herkömmlicher Weise aufgebracht, wobei vorzugsweise Beläge mit nur 2 bis 5 cm Stärke verwendet werden. Die Druckfestigkeit eines solchen Belags entspricht zwar nicht ganz derjenigen von Beton oder Asphalt, dafür erreicht die Biegezugfestigkeit deutlich höhere Werte als bei diesen Materialien, was insbesondere für die Haltbarkeit und Dauergebrauchsfähigkeit von ausschlaggebender Bedeutung ist.

Durch die hohe Grobporigkeit des erfindungsgemäßen Außenbelags ist nicht nur eine sofort wirkende, totale Wasserdurchlässigkeit gegeben, die nach Untersuchungsberichten das rund 100fache gegenüber üblichen Drainpflastern erreicht. Ein weiterer, hiermit verbundener Vorteil liegt in der selbstreinigenden Wirkung eines solchen Belages durch den schnellen Wasserdurchgang, so daß übliche Verschmutzungen, z. B. durch Reifen oder dergleichen problemlos beseitigt werden können.

Trotz der für diese Beläge sehr geringen Stärke von z. B. 2 bis 5 cm, können aufgrund der hohen Biegezugfestigkeit mit gemessenen Werten von z. B. 7,6 N/mm² derartige Beläge auch bei dauerhafter Belastung z. B. an Pkw-Abstellplätzen verwendet werden, bei denen sich geringe Setzungen des Unterbaus ergeben können. Diese Verformung wird von dem Belag elastisch aufgenommen, ohne daß dieser reißt. Versuche haben ergeben, daß dies bereits bei Belagstärken von 2 bis 3 cm gegeben ist.

Zur Erzielung einer noch höheren Belastungsfähigkeit des Belags, beispielsweise zum Befahren mit einem Lastkraftwagen, kann der erfindungsgemäße Belag auch in eine Wabenstruktur eingebracht werden, wie sie beispielsweise unter dem Namen "Ecoraster" der Firma KHW Umweltdientst GmbH, Köln bekannt geworden ist. Mittels einer solchen Wabenstruktur aus hochfestem Polyethylen kann der erfindungsgemäße Belag ebenfalls in der Schichtstärke von nur 3 cm durch einen LKW befahren werden. Die seitlichen Wände der Wabenstruktur unterstützen dabei die Festigkeit des Belags. Dabei können die Waben in einer Größe von beispielsweise 30 x 30 oder 40 x 40 cm vorgefertigt werden. Die Wabenwandung dient als eine Art Armierung oder Stütze für das eingebrachte Material, wobei die Verbindung der Waben Schubkräfte aufnehmen kann.

Ein besonderer Vorteil der Erfindung liegt auch in der Möglichkeit der Farbgebung während der Vorbereitungshandlungen beim Aufbau des Belags. Hierdurch sind Dekorbeläge mit verschiedenen Farbkornmischungen möglich, die oft aus zwei bis drei Farbkomponenten hergestellt werden und ein hohes Maß an optischer Eleganz darstellen.

### Herstellungsverfahren als Ausführungsbeispiel:

Bei der Herstellung des erfindungsgemäßen Belags werden als Zuschlagsstoffe vorzugsweise Quarzfeinkieskörner verwendet, die eine möglichst gute Rundung aufweisen sollen, d. h. es werden zur optimalen Ausführung der Erfindung möglichst keine oder nur wenig gebrochene oder splittige Körner verwendet.

Die Quarzfeinkieskörner werden in einem außerst engen Kornband verarbeitet, d.h. in Korngrößen von z. B. 0,7 bis 1,2 mm oder 1,0 bis 2,4 mm, bzw. 2 bis 4 mm. Zur Vorbereitung des Belags wird dieses Ausgangsprodukt mehrfach sauber gewaschen, danach feuergetrocknet und entstaubt. Die absolute Sauberkeit und Reinheit dieses Ausgangsprodukts ist von Bedeutung, um eine sonst ständig vorhandene Staubschicht um die Einzelkörner zu vermeiden, die einer späteren Verbindung der Einzelkörner negativ entgegensteht. Dabei ist es besonders vorteilhaft, in einzelnen Chargen die so vorbereiteten Einzelkörner mit einem Epoxyd- oder PU-Harz in einem ersten Arbeitsgang zu umgeben, um eine Umhüllung (coating) und ggf. eine Einfärbung des Einzelkorns zu erreichen. Hierfür wird beispielsweise ein reaktiv verdünntes Epoxyd-Harz verwendet, wie es beispielsweise als "Eurepox 783 der Firma Witco, Bergkamen" bekannt ist, mit einem Aminhärter und Zusatz von entsprechenden Farbpasten. Als Härter können beispielsweise Euredur 46 S bzw. TB 02123 H von der Firma Witco verwendet werden. Die verwendete Härterzugabe bei einer evtl. gewünschten Färbung richtet sich nach dem zu färbenden Farbton. Der Härtertyp TB 02123 H weist neben einer kürzeren Härtungsgeschwindigkeit eine bessere Vergilbungsstabilität gegenüber dem Härter Euredur 46 S auf, welches sich positiv auf helle Farben bemerkbar macht. Die verwendeten Farbpasten sind in Epoxyd- bzw. Aldehydharz angeriebene Pigmente. Das umhüllende Gefüge des jeweiligen einzelnen Quarzkorns ist demzufolge ein Duroplast und somit weitgehend gegen Chemikalien beständig.

Dieser Vorgang der Behandlung der Einzelkörner in einzelnen Chargen mit Epoxyd- oder PU-Harz und ggf. einem jeweiligen Farbzusatz geschieht in einem Mischer. Dabei ist die verwendete Harz/Härterkombination niederviskos, um eine restlose Umhüllung und Färbung des einzelnen Quarzkornes zu gewährleisten. Bei der Einfärbung werden 0,8 bis 1,3 Gewichtsprozent Gesamtharz und Farbpaste zugegeben.

Damit die einzelnen, evtl. farbigen Körner nicht zusammenkleben, wird bei der erfindungsgemäßen Produktherstellung im heißen Luftstrom oder durch große Fallhöhe im Mischer der Trocknungsund Aushärtungsprozeß abgeschlossen, so daß schließlich nur lose Einzelkörner gleicher Farbe in entsprechenden Chargen in Säcken abgefüllt werden können.

Sollte ein Quarzfeinkies mit guter Rundung als Rundkorn nicht erhältlich sein, kann ggf. das Ausgangsprodukt für den erfindungsgemäßen Belag auch mit gebrochenem Korn (Feinsplitt) hergestellt werden. Dies erfordert allerdings eine höhere Harzzugabe, was den Herstellungsprozeß verteuert. Weiterhin wird aufgrund der geringeren Hohlräume die mögliche Wasserdurchlässigkeit hierdurch vermindert. Bei entsprechenden geringen Anforderungen kann dies jedoch auch genügen.

Die Vorbereitung des Korns in einem ersten Arbeitsschritt zur Herstellung von losen beschichteten Einzelkörnern ist deshalb für die vorliegende Erfindung von Bedeutung. Die Umhüllung des Korns bewirkt eine Vorbereitung für den späteren zweiten Arbeitsschritt zur Belagsherstellung. Nur hierdurch kann sich der nachfolgende Klebevorgang zur Zusammenfügung der vorbereiteten Einzelkörner optimal gestalten.

Ein derart vorbereitetes Ausgangsprodukt aus losen, gegebenenfalls eingefärbten und trockenen Einzelkörnern kann dann zur Belagsherstellung weiter verwendet werden. Die Farbmischung kann beim Belagseinbau in beliebigem prozentualem Gewichtsanteil der einzelnen Farbe je nach Wunsch vorgenommen werden. Bei der Mischung für den Belagseinbau wird dann als Klebemittel ein Basisharz (ohne Reaktivverdünnung) z. B. Eurepox 720 der Firma Witco mit einem geeigneten Härtergemisch verwendet, wobei als Härter beispielsweise ein Arminhärter TB 2123 h verwendet werden kann. Falls erforderlich, kann noch ein sogenanntes Thixotropiermittel als "Stellmittel" zum Andicken hinzugegeben werden, um die Viskosität der Klebemischung zu beeinflussen. Hierfür kann z. B. das Produkt Aerosil R 202 der Firma Degussa verwendet werden. Die Auswahl eines Basisharzes mit dem Arminhärter TB 02123 H verbindet folgende Vorteile bei der Verarbeitung bzw. beim jeweiligen Einsatzzweck:
1. Das Basisharz und Härter reagieren schnell, so daß eine geringe Feuchtigkeitsempfindlichkeit eintritt. Auch werden die Endfestigkeiten schneller erreicht und es werden Verlegungen bis zu einer Temperatur von nur + 5°Celsius möglich.
2. Die Endfestigkeiten sind beim Einsatz eines Basisharzes höher als beim reaktivverdünntem Harz.
3. Die Vergilbungsbeständigkeit des Epoxysystemes wird durch den verwendeten Arminhärter TB 02123 H stark verbessert.

Kurz vor dem Einbau wird demzufolge die Farbquarzmischung ggf. aus mehreren Komponenten in einem Hochleistungszwangsmischer vorbereitet, wie er beispielsweise von der Firma Diem bekannt ist. Unter Zugabe von ca. 1 bis 4 % und insbesondere von 2 bis 3 % farblosem Harz als Klebemittel werden die Bestandteile wie oben angegeben gemischt und danach verarbeitet. Bei kleineren Flächen kann dies vom Bodenleger von Hand erfolgen oder aber mit einem speziellen Fertiger, wie er beispielsweise als "Einbaufertiger" der Firmen Glocker oder SMG bekannt geworden ist. Der Belag wird dabei gut verdichtet und geglättet und kann fugenlos eingebaut werden.

Das Glätten kann auch mit einem sogenannten Flügelglätter erfolgen, womit die Kellenschläge vermieden werden. Der Flügelglätter sollte vorzugsweise mit Hartplastikflügeln ausgerüstet werden, damit kein Oxidationsabrieb und damit keine Verfärbung der Oberfläche erfolgen kann.

Durch die verwendeten Materialien wird eine hohe Viskosität des Harzgemisches (zwischen 5000-6000 mPa*s) erzielt, wobei bereits bei einem geringen Harzanteil beim Einbau von z. B. nur 2,5 Gewichtsprozent trotzdem eine optimale Verklebung der "Monokörner" erzielt wird, bei gleichzeitiger maximal hoher Wasserdurchlässigkeit. Durch die minimale Menge des verklebenden Harzanteils erfolgt keine Zusetzung des Untergrunds mit Überschußharz, so daß die optimale Wasserdurchlässigkeit gewährleistet ist. Auch dieses so hergestellte Gefüge stellt demnach ein Duroplast dar.

Die Erhärtung des Gefüges erfolgt je nach Temperaturen in ca. 6 bis 24 Stunden. Danach erreicht der Belag eine Druckfestigkeit in der Größenordnung von 11,5 ± 1,3 N/mm² sowie eine Biegezugfestigkeit von 7,5 ± 0,5 N/mm², wie es aus Meßergebnissen vorliegt. Vergleichbare Werte bei Beton liegen in der Größenordnung von 15 bis 25 N/mm² für die Druckfestigkeit aber nur von 1 bis 3 N/mm² für die Biegezugfestigkeit.

Die hohe Biegezugsteifigkeit des erfindungsmäßen Belags kann durch Zugabe *von* Kunststoffasern und inbesondere von Fiberglasfasern mit einer Länge von z. B. circa 1 bis 2 mm und insbesondere 1,5 mm zum Klebemittel (Harzkleber) zur Verbindung der einzelnen Körner erreicht werden. Diese Kunststoffasern wirken wie eine Art Armierung für die Klebestelle und verfestigen den Belag in hohem Maße.

Außerdem ist es bevorzugt, daß dem Klebemittel zur Verbindung der Einzelkörner Glimmer, Kunststoffglitter oder dgl. beigemischt wird. Auf diese Weise lassen sich ansprechende Lichtbrechungseffekte bzw. Farbeffekte erzielen. Beispielsweise wird auf 100 kg Einzelkörner und 2,5 kg Klebemittel 10 g Glimmer zu Beginn des Mischens beigegeben.

Für die Erfindung ist es vorteilhaft, daß die Viskosität und die Oberflächenspannung des Bindemittels optimiert, das heißt optimal eingesetzt wird, um die Einzelkörner mit ihrer staubfreien Umhüllung zu verkleben. Dabei wird die Viskosität und die Fließfähigkeit des Kleber-Harzes so eingestellt, daß das Harz nicht vom Einzelkorn abtropft, sondern am Korn haftet und dennoch gewisse Fließeigenschaften beibehält. Es ist demzufolge vorteilhaft, daß die Viskosität und die Fließfähigkeit des Bindemittels optimiert, d. h. so eingesetzt wird, daß die Oberflächenspannung des Bindemittels in Verbindung mit den Quarzkörnern so ausgenützt wird, daß eine Anreicherung des Klebers/Bindemittels beim Zusammenführen von zwei angrenzenden Einzelkörnern an den Berührungspunkten erfolgt.

Anstelle des zuvor erwähnten "Stellmittels" zur Beeinflussung der Viskosität können alternativ auch andere Zuschlagsstoffe wie zur Tixotropierung (Verdickung) verwendet werden. Insbesondere führt die Zugabe von Fieberglas- oder Stoffasern zum gewünschten Effekt und einer zusätzlichen Armierung der Klebestellen und damit zu einer deutlichen Erhöhung der Biegezugfestigkeit des Belages. Als zweckmäßig hat es sich außerdem erwiesen, wenn dem Klebemittel zur Verbesserung der Fließeigenschaften noch ein Benetzungsadditiv, z. B. auf Silanbasis beigemischt wird, damit sich das Klebemittel leichter an den Berührungsstellen zwischen den Körnern anreichern kann.

Die Viskosität des Bindemittels wird durch die sogenannten "Stellmittel" eingestellt. Dabei soll das Bindemittel sich am Einzelkorn nahezu punktförmig an der Klebestelle anreichern, so daß insgesamt nur sehr wenig Klebemittel benötigt wird. Ausschlaggebend hierfür ist die richtige Oberflächenspannung des Klebemittels. Das Klebemittel oder Bindemittel wirkt deshalb erfindungsgemäß mit dem vorbereiteten Einzelkorn zusammen, d. h. beim Zusammenführen von zwei angrenzenden Einzelkörnern reichert sich das Bindemittel aufgrund der Oberflächenspannung an der Berührungsstelle an. Dabei können aufgrund der durchgeführten zwei Arbeitsschritte jede beliebige Farbkombinationen für einen Belag zusammengestellt werden, da die Farbgebung im ersten Arbeitsschritt erfolgt.

Die optimale Wasserdurchlässigkeit ergibt sich demzufolge durch die nur punktuelle Berührung der Körner und durch die zwischen den Körnern verbleibenden Freiräume.

Mit dem erfindungsgemäßen Außenbelag werden demzufolge völlig neue Anwendungsbereiche erschlossen. Insbesondere auch in Verbindung mit der dauerhaften Einfärbung des Einzelkorns lassen sich damit attraktive Außenbeläge herstellen, deren Farben langzeitig erhalten bleiben. Die Verwendung derartiger Beläge für wasserdurchlässige Außenbeläge mit ausreichend hoher Belastbarkeit stellt deshalb einen enormen technischen Fortschritt dar.

Die Erfindung ist nicht auf das dargestellte und beschriebene Ausführungsbeispiel beschränkt. Sie umfaßt auch vielmehr alle Abwandlungen im Rahmen der Schutzrechtsansprüche. Dabei sind selbstverständlich Variationen bei den Herstellerprodukten möglich, die ähnliche Eigenschaften aufweisen. Maßgeblich ist ein optimales Produkt mit ausreichend hoher Druckfestigkeit und überragender Biegezugfestigkeit im Verhältnis zur Stärke des Belags.

Weiterhin können mit dem gleichen Materialaufbau auch Gehwegplatten und Pflastersteine sowie Beläge jeglicher Art manuell oder maschinell hergestellt werden.

## Patentansprüche

1. Belag oder Platte, vorzugsweise Außenbelag mit wasserdurchlässigen Eigenschaften, **gekennzeichnet durch** folgende Merkmale:
- der Belag besteht aus einem Granulat, insbesondere einem Mineralkorn wie Kies oder dergleichen mit engem Kornband von z. B. 0,7 bis 1,2 mm oder 1,0 bis 2,4 mm oder 2 bis 4 mm zur Bildung von großen Zwischenräumen zwischen aneinander grenzenden Einzelkörnern;
- zur Erzielung einer gleichartigen definierten Oberfläche sind die Einzelkörner mit einer niedrigviskosen Kunstharz-Umhüllung versehen;
- die Verbindung der kunstharzumhüllten Einzelkörner zu einem Belag erfolgt mittels eines höherviskosen Klebemittels mit einem sehr geringen Klebemittelanteil von ca. 1 bis 4 % und insbesondere 2 bis 3 %, wobei der Belag in einer Stärke von ca. 2 bis 10 cm und insbesondere 2 bis 5 cm ausgeführt ist.

2. Belag nach Anspruch 1, **dadurch gekennzeichnet, daß** als Ausgangsprodukt ein vorzugsweise feuergetrocknetes, weitestgehend staubfreies Grundkorn bzw. Granulat aus gut gerundetem Feinkies, insbesondere Quarzsand oder Quarzkies verwendet wird, mit einer Korngröße von 0,7 bis 1,2 mm bzw. 1,0 bis 2,4 mm bzw. 2 bis 4 mm , wobei das Ausgangsprodukt eine möglichst homogene und geschlossene Oberfläche aufweist.

3. Belag nach Anspruch 1 oder 2, **dadurch gekennzeichnet, daß** anstelle eines Rundkorns hilfsweise auch als Ausgangsprodukt ein gebrochenes Korn wie z. B. Splitt, Glasbruch oder dergleichen verwendbar ist.

4. Belag nach einem der vorhergehenden Ansprüche, **dadurch gekennzeichnet, daß** als Niederviskose-Kunstharzumhüllung eine Epoxyd- Acrylat- oder Polyurethan-Harzumhüllung verwendbar ist.

5. Belag nach Anspruch 1 oder 4, **dadurch gekennzeichnet, daß** gleichzeitig mit der Umhüllung des Granulats durch Zugabe von Farbpigmenten oder Pasten eine Einfärbung des Einzelkorns erfolgt.

6. Belag nach einem der Ansprüche 1 bis 5, **dadurch gekennzeichnet, daß** zur Verklebung des kunstharzumhüllten Einzelkorns ein höherviskoses, vorzugsweise transparentes Klebemittel auf der Basis von Epoxyd- Acrylat- oder Polyurethanharz verwendet wird.

7. Belag nach Anspruch 1 oder 6, **dadurch gekennzeichnet, daß** die Viskosität bzw. Fließeigenschaften des Klebemittels einstellbar ist, wobei die Viskosität bzw. die Fließfähigkeit des Kleber-Harzes für die Verbindung des Granulats derart eingestellt wird, daß einerseits das Harz nicht von dem umhüllten Einzelkorn abtropft und das andererseits eine Fließfähigkeit beibehalten wird.

8. Belag nach Anspruch 7, **dadurch gekennzeichnet, daß** das Klebemittel zur Verbindung der Einzelkörner eine Oberflächenspannung aufweist, die an den Berührungsstellen des Granulats oder Einzelkorns zu einer Anreicherung des Klebemittels führt.

9. Belag nach Anspruch 7 oder 8, **dadurch gekennzeichnet, daß** die Fließfähigkeit und/oder die Oberflächenspannung des Klebemittels zur Verbindung der Einzelkörner mittels Additiven, insbesondere Tixotropiermittel und Benetzern regulierbar sind.

10. Belag nach Anspruch 1 oder 7, **dadurch gekennzeichnet, daß** die Einstellung der Viskosität des Klebemittels durch die Zugabe von Stellmitteln, z. B. Kieselsäure oder anderen Füllstoffen, wie z. B. Fasern, Talkum, Quarzmehl oder dergleichen erfolgt.

11. Belag nach einem Ansprüche 1 oder 10, **dadurch gekennzeichnet, daß** dem Klebemittel zur Verbesserung der Biegezugfestigkeit Fasern und insbesondere Kunststoff- oder Fieberglasfasern mit einer Länge von 0,5 bis 1,5 mm und insbesondere 1,5 mm beigemischt werden, wobei die Zugabe vorzugsweise in der Größenordnung von 1 bis 6 Gewichtsprozent des Klebers erfolgt.

12. Belag nach einem der Ansprüche 1 bis 11, **dadurch gekennzeichnet, daß** dem Klebemittel zur Erzielung besonderer optischer Effekte Glimmer, Kunststoffmittel oder dergleichen beigemischt wird.

13. Verfahren zur Herstellung eines Belags oder einer Platte und insbesondere eines Außenbelags nach einem der vorhergehenden Ansprüche 1 bis 12, **dadurch gekennzeichnet, daß** Granualt aus einem Mineralkorn und insbesondere Quarzkieskörner mit einer möglichst guten Rundung und einer Korngröße mit engem Kornband von z. B. 0,7 bis 1,2 mm oder 1,0 bis 2,4 mm oder 2 bis 4 mm in einem ersten Arbeitsgang sauber gewaschen, feuergetrocknet und entstaubt werden und in einzelnen Chargen die losen Einzelkörner mit einem niedrigviskosen Kunstharzumhüllung, gegebenenfalls unter Zugabe eines Farbzusatzes umhüllt werden und das ein derart hergestelltes Ausgangsprodukt aus losen, gegebenenfalls eingefärbten Einzelkörnern in einem späteren Arbeitsgang in einem Mischer unter Zugabe eines höherviskosen Klebemittels von ca. 1 bis 4 % und insbesonderre 2 bis 3 % Klebemittelanteil gemischt und zu einem Belag in einer Stärke von ca. 2 bis 10 cm und insbesondere 2 bis 5 cm verlegt wird.

14. Verfahren nach Anspruch 13, **dadurch gekennzeichnet, daß** ein Klebemittel für die Herstellung und Verbindung der Einzelkörner auf der Basis von Epoxyd-, Acrylat- oder Polyurethanharz verwendet wird.

15. Verfahren nach Anspruch 13 oder 14, **dadurch gekennzeichnet, daß** ein fugenloser Einbau mit Verdichtung von Hand oder mittels eines Kleinfertigers erfolgt.

16. Verfahren nach einem der vorhergehenden Ansprüche 13 bis 15, **dadurch gekennzeichnet, daß** das Glätten mit einem Flügelpropeller mit Hartkunststoffblättern erfolgt.

17. Verfahren nach einem der vorhergehenden Ansprüche 13 bis 16, **dadurch gekennzeichnet, daß** der Außenbelag auf einem wasserdurchlässigen "Betonunterbau" verlegbar ist, der z. B. als Einkornbeton für schwere Belastungen ausgebildet ist.

18. Verfahren nach einem der vorhergehenden Ansprüche 13 bis 17, **dadurch gekennzeichnet, daß** der Belag in eine Wabenstruktur eingebettet ist.

## Claims

1. Covering or sheet, preferably outer covering with water-permeable properties, **characterised by** the following features:
- the covering consists of a granular material, in particular a mineral grain such as gravel or the like with a small grain range of, for example, 0.7 to 1.2 mm or 1.0 to 2.4 mm or 2 to 4 mm to form large gaps between individual grains which are adjacent to one another;
- to achieve a similarly defined surface, the individual grains are provided with a low-viscosity synthetic resin coating;
- the synthetic resin-coated individual grains are joined to form a covering by means of higher-viscosity adhesive with a very low adhesive content of approximately 1 to 4% and, in particular 2 to 3%, the covering being formed in a thickness of approximately 2 to 10 cm and, in particular, 2 to 5 cm.

2. Covering according to claim 1, **characterised in that** a preferably fire-dried, largely dust-free base grain or granular material made of well-rounded small gravel, in particular quartz sand or quartz gravel, with a grain size of 0.7 to 1.2 mm or 1.0 to 2.4 mm or 2 to 4 mm is used as starting product, the starting product having a surface which is as homogeneous and closed as possible.

3. Covering according to claim 1 or 2, **characterised in that** instead of a round grain a crushed grain, such as chippings, broken glass or the like may alternatively also be used as starting product.

4. Covering according to any of the preceding claims, **characterised in that** an epoxide, acrylate or polyurethane resin coating can be used as lower viscosity synthetic resin coating.

5. Covering according to claim 1 or 4, **characterised in that** the individual grain is coloured by adding pigments or pastes at the same time as the granular material is coated.

6. Covering according to any of claims 1 to 5, **characterised in that** a higher-viscosity, preferably transparent adhesive based on epoxide, acrylate or polyurethane resin is used to bond the synthetic resin-coated individual grain.

7. Covering according to claim 1 or 6, **characterised in that** the viscosity or flow properties of the adhesive is/are adjustable, the viscosity or the flowability of the adhesive resin being adjusted for bonding of the granular material in such a way that, on the one hand, the resin does not drip off the coated individual grain and, on the other hand, flowability is retained.

8. Covering according to claim 7, **characterised in that** the adhesive for bonding the individual grains has a surface tension which leads to strengthening of the adhesive at the points of contact of the granular material or individual grain.

9. Covering according to claim 7 or 8, **characterised in that** the flowability and/or the surface tension of the adhesive for bonding the individual grains may be controlled by means of additives, in particular thixotropic agents and wetting agents.

10. Covering according to claim 1 or 7, **characterised in that** the viscosity of the adhesive is adjusted by adding regulators, for example silica or other fillers, such as fibres, talc, quartz powder or the like.

11. Covering according to any of claims 1 to 10, **characterised in that** fibres and, in particular, plastic or fibreglass fibres with a length of 0.5 to 1.5 mm, and in particular 1.5 mm, are admixed with the adhesive to improve the flexural strength, the addition preferably being 1 to 6 wt.% of the adhesive.

12. Covering according to any of claims 1 to 11, **characterised in that** mica, plastics or the like are admixed with the adhesive to achieve particular visual effects.

13. Process for producing a covering or a sheet and, in particular, an outer covering according to any of the preceding claims 1 to 12, **characterised in that** the granular material made of a mineral grain and, in particular, quartz gravel grains which are as rounded as possible and have a grain size with small grain range of, for example, 0.7 to 1.2 mm or 1.2 to 2.4 mm or 2 to 4 mm are washed clean in a first operation, fire-dried and de-dusted, and the loose individual grains are coated in individual batches with a low-viscosity synthetic resin coating, optionally with the addition of a colour additive, and that a starting product produced in this way from loose, optionally coloured individual grains is mixed in a mixer in a subsequent operation with the addition of a higher-viscosity adhesive with an adhesive content of approximately 1 to 4% and, in particular, 2 to 3% and is made into a covering with a thickness of approximately 2 to 10 cm and, in particular, 2 to 5 cm.

14. Process according to claim 13, **characterised in that** an adhesive for the production and bonding of the individual grains based on epoxide, acrylate or polyurethane resin is used.

15. Process according to claim 13 or 14, **characterised in that** a joint-free arrangement is made with compression by hand or by means of a small finisher.

16. Process according to any of the preceding claims 13 to 15, **characterised in that** polishing is carried out with a blade propeller with rigid plastic blades.

17. Process according to any of the preceding claims 13 to 16, **characterised in that** the outer covering can be placed on a water-permeable "concrete foundation" which, for example, is formed as single grain concrete for heavy loads.

18. Process according to any of the preceding claims 13 to 17, **characterised in that** the covering is embedded in a honeycomb structure.

## Revendications

1. Revêtement ou plaque, avantageusement revêtement externe ayant des propriétés de perméabilité à l'eau,
**caractérisé par** les particularités suivantes :
- le revêtement est constitué d'un granulat, en particulier un grain minéral, comme du gravier ou analogue, ayant une bande de grains étroite de par exemple 0,7 à 1,2 mm ou 1,0 à 2,4 mm ou 2 à 4 mm pour former de grands espaces intermédiaires entre des grains individuels adjacents ;
- pour obtenir une surface uniforme définie, les grains individuels sont munis d'une enveloppe de résine synthétique à faible viscosité ;
- la liaison des grains individuels enveloppés de résine synthétique en un revêtement est effectuée au moyen d'une colle à viscosité élevée avec une proportion très faible de colle d'environ 1 à 4 % et, en particulier, 2 à 3 %, le revêtement étant réalisé en une épaisseur d'environ 2 à 10 cm et, en particulier, 2 à 5 cm.

2. Revêtement selon la revendication 1,
**caractérisé en ce que**, comme produit de départ, on utilise un granulat ou grain de base, très largement dépourvu de poussière, avantageusement séché à la chaleur, en un gravier fin bien arrondi, en particulier du gravier de quartz ou du sable silicieux, ayant une taille de grain de 0,7 à 1,2 mm ou 1,0 à 2,4 mm ou 2 à 4 mm, le produit de départ présentant une surface la plus possible homogène et fermée.

3. Revêtement selon la revendication 1 ou 2,
**caractérisé en ce que**, à la place d'un grain rond, on peut également utiliser, de façon auxiliaire, comme produit de départ, un grain brisé, comme par exemple du gravillon, du groisil ou analogue.

4. Revêtement selon une des revendications précédentes,
**caractérisé en ce que**, comme enveloppe de résine synthétique à faible viscosité, on peut utiliser une enveloppe de résine époxyde, acrylate ou de polyuréthane.

5. Revêtement selon la revendication 1 ou 4,
**caractérisé en ce que**, simultanément à l'enveloppement du granulat, une coloration du grain individuel est effectuée par ajout de pigments colorés ou de pâtes.

6. Revêtement selon une des revendications 1 à 5,
**caractérisé en ce que**, pour coller le grain individuel enveloppé de résine synthétique, on utilise une colle à viscosité élevée, avantageusement transparente, sur la base d'une résine époxyde, acrylate ou de polyuréthane.

7. Revêtement selon la revendication 1 ou 6,
**caractérisé en ce que** la viscosité ou les propriétés d'écoulement de la colle sont réglables, la viscosité ou la capacité d'écoulement de la résine-colle pour la liaison du granulat étant réglée de façon telle que, d'une part, la résine ne goutte pas du grain individuel enveloppé et que, d'autre part, une capacité d'écoulement est conservée.

8. Revêtement selon la revendication 7,
**caractérisé en ce que** la colle pour relier les grains individuels présente une tension de surface qui, aux points de contact du granulat ou du grain individuel, entraîne un enrichissement de la colle.

9. Revêtement selon la revendication 7 ou 8,
**caractérisé en ce que** la capacité d'écoulement et/ou la tension de surface de la colle pour la liaison des grains individuels peuvent être régulées au moyen d'additifs, en particulier des agents thixotropes et des agents mouillants.

10. Revêtement selon la revendication 1 ou 7,
**caractérisé en ce que** le réglage de la viscosité de la colle est effectué par l'ajout d'agents de réglage, par exemple d'acide silicique, ou d'autres matières de remplissage, comme par exemple des fibres, du talc, de la poudre de quartz ou analogues.

11. Revêtement selon la revendication 1 ou 10,
**caractérisé en ce que** des fibres et, en particulier, des fibres de verre ou de matière synthétique ayant une longueur de 0,5 à 1,5 mm et en particulier 1,5 mm sont mélangées à la colle pour améliorer la résistance à la flexion-traction, l'ajout étant effectué avantageusement dans l'ordre de grandeur de 1 à 6 % en poids de la colle.

12. Revêtement selon une des revendications 1 à 11,
**caractérisé en ce que** du mica, des matières synthétiques ou analogues sont mélangés à la colle pour obtenir des effets optiques particuliers.

13. Procédé pour fabriquer un revêtement ou une plaque et, en particulier, un revêtement externe selon une des revendications précédentes 1 à 12,
**caractérisé en ce qu'**un granulat en un grain minéral et, en particulier, des grains de gravier de quartz ayant le meilleur arrondi possible et une taille de grain avec une bande de grains étroite de par exemple 0,7 à 1,2 mm ou 1,0 à 2,4 mm ou 2 à 4 mm est, dans une première étape de travail, lavé, séché à chaud et dépoussiéré, et, en charges individuelles, les grains individuels lâches sont enveloppés par une enveloppe de résine synthétique de faible viscosité, le cas échéant en ajoutant un additif coloré, et **en ce qu'**un produit de départ ainsi fabriqué en grains individuels lâches, le cas échéant colorés, dans une étape de travail ultérieure, est mélangé dans un mélangeur en ajoutant une colle de viscosité élevée en une proportion d'environ 1 à 4 % et, en particulier, 2 à 3 % et est posé en un revêtement ayant une épaisseur d'environ 2 à 10 cm et, en particulier, 2 à 5 cm.

14. Procédé selon la revendication 13,
**caractérisé en ce qu'**une colle pour la réalisation et la liaison des grains individuels sur la base de résine époxyde, acrylate ou de polyuréthane est utilisée.

15. Procédé selon la revendication 13 ou 14,
**caractérisé en ce qu'**une pose sans joint à étanchéité est effectuée manuellement ou au moyen d'un petit finisseur.

16. Procédé selon une des revendications précédentes 13 à 15,
**caractérisé en ce que** le lissage est effectué par un propulseur à ailettes ayant des lames en matière synthétique dure.

17. Procédé selon une des revendications précédentes 13 à 16,
**caractérisé en ce que** le revêtement externe peut être posé sur une base de béton perméable à l'eau, qui est réalisée par exemple comme béton pour de lourdes charges.

18. Procédé selon une des revendications précédentes 13 à 17,
**caractérisé en ce que** le revêtement est noyé dans une structure en nid d'abeilles.
